# EUROPEAN PATENT APPLICATION

(11) **EP 4 693 829 A1**
(43) Date of publication of application: **11.02.2026**
(21) Application number: 23929731.0
(22) Date of filing: 11.07.2023
(51) Int. Cl.: H02K 1/17, H02K 1/18, H02K 7/08, H02K 1/22, H02K 5/04, H02K 7/12

(54) **PULL PUMP MOTOR FOR FITNESS EQUIPMENT**

(30) Priority: 28.03.2023 CN 202310307810
(71) Applicant: Kerui Technology (Dongguan) Co., Ltd., Dongguan, Guangdong 523000 (CN)
(72) Inventor: YUAN, Yongzhi, Yongzhou, Hunan 425000 (CN); HUANG, Mingqing, Yongzhou, Hunan 425000 (CN); YANG, Zhihai, Nanning, Guangxi 530000 (CN)
(74) Representative: Metida
(86) International application number: PCT/CN2023/106676
(87) International publication number: WO 2024/198154

(57) **Abstract**

Disclosed is a pull pump motor for fitness equipment. The pull pump motor for fitness equipment includes a motor shell, wherein a stator core is transversely provided inside the motor shell; a rotor is transversely provided inside the stator core; the rotor and the stator core are configured to rotate in the same direction; a clamping slot is formed on an inner side of the stator core; the clamping slot is arched upward; the stator core is connected to the rotor through cooperation of the clamping slot; a protrusion is vertically provided on a surface of the rotor; the protrusion is vertically inserted into the clamping slot; through cooperation between the protrusion and the clamping slot, a rotating shaft is transversely formed inside the rotor; the rotating shaft and the rotor are configured to rotate in the same direction; the rotating shaft extends through the motor shell; a rotating wheel is transversely inserted onto the rotating shaft; the rotating wheel extends through the rotating shaft and is connected to the rotor; the rotating wheel is configured to rotate at a side of the motor shell; and the rotating wheel, the rotating shaft, and the rotor are configured to rotate in the same direction.

## Description

### TECHNICAL FIELD

The present disclosure relates to the field of fitness equipment, and in particular, to a pull pump motor for fitness equipment.

### BACKGROUND

Fitness equipment is generally classified into two main categories according to the number of training functions: single-function type and multi-function comprehensive type. Commonly used equipment includes rowing machines, exercise bikes, steppers, treadmills, and waist trainers. The pull machines in fitness equipment are frequently employed for human arm training. However, in the prior art, when a user uses pull machines for training, it requires manual handling of weight blocks followed by adjustment of the required number of weight blocks and weight value before arm strength training can be conducted. This results in excessively long preparation time before training. In view of this, a pull pump motor for fitness equipment is proposed.

### SUMMARY

The present disclosure has been made to overcome the shortcomings of the prior art and aims to provide a technical solution capable of solving the aforementioned problems.

A pull pump motor for fitness equipment, including a motor shell, wherein a stator core is transversely provided inside the motor shell; a rotor is transversely provided inside the stator core; the rotor and the stator core are configured to rotate in the same direction; a clamping slot is formed on an inner side of the stator core; the clamping slot is arched upward; the stator core is connected to the rotor through cooperation of the clamping slot; a protrusion is vertically provided on a surface of the rotor; the protrusion is vertically inserted into the clamping slot; through cooperation between the protrusion and the clamping slot, a rotating shaft is transversely formed inside the rotor; the rotating shaft and the rotor are configured to rotate in the same direction; the rotating shaft extends through the motor shell; a rotating wheel is transversely inserted onto the rotating shaft; the rotating wheel extends through the rotating shaft and is connected to the rotor; the rotating wheel is configured to rotate at a side of the motor shell; and the rotating wheel, the rotating shaft, and the rotor are configured to rotate in the same direction.

Preferably, stator windings are circumferentially provided around an outside of the stator core; magnet steels are circumferentially provided on an inner side of the motor shell; the magnet steels are parallel to the stator windings; and the stator windings and the magnet steels are magnetically coupled to form a magnetic field.

Preferably, a first bearing is provided at a connection between the rotating wheel and the rotating shaft; the first bearing is sleeved on a left side of the rotating shaft; and the first bearing and a left side surface of the rotating wheel are on the same vertical plane.

Preferably, the rotating shaft is provided with a first limiting nut; the first limiting nut is located on the left side of the rotating shaft; and the first limiting nut is parallel to the rotating wheel.

Preferably, a second bearing is provided at a connection between the rotating wheel and the rotor; the second bearing is sleeved on a left side of the rotor; and the second bearing and a left side surface of the motor shell are on the same vertical plane.

Preferably, a third bearing is provided at a connection between the rotating shaft and the motor shell; the third bearing is located on a right side inside the motor shell; and the rotating shaft extends through the third bearing.

Preferably, the rotating shaft is provided with a second limiting nut; the second limiting nut is located on a right side of the rotating shaft; and the second limiting nut is parallel to the motor shell.

Preferably, oil blocking covers are provided on left and right sides of the stator core; blocking rods are circumferentially provided around edges of the oil blocking covers; and the blocking rods are parallel to sides of the stator core.

Compared with the prior art, the beneficial effects of the present disclosure are as follows: through the rotation of the rotor, the rotational speed of the rotating shaft and the rotating wheel is regulated, enabling the generation of resistance when connected and cooperating with an external pull pump, thereby replacing conventional weight blocks. The motor features a compact size, ensures safety, prevents muscle injury, and allows for adjustment of the extension and retraction speeds.

Additional aspects and advantages of the present disclosure will be partly given in the following description, partly become apparent from the following description, or may be learned through practice of the present disclosure.

### BRIEF DESCRIPTION OF THE DRAWINGS

In order to more clearly illustrate the embodiments of the present disclosure or the technical solutions in the prior art, the drawings required in the description of the embodiments or the prior art will be briefly described below. Obviously, the drawings in the following description are merely some embodiments of the present disclosure, and for those of ordinary skill in the art, other drawings may be obtained according to these drawings without creative efforts.
Fig. 1 is a schematic structural diagram of a pull pump motor for fitness equipment.
Fig. 2 is another schematic structural diagram of the pull pump motor for fitness equipment.
Fig. 3 is a further schematic structural diagram of the pull pump motor for fitness equipment.
Fig. 4 is a schematic structural diagram of a stator core.
Fig. 5 is another schematic structural diagram of the stator core.
Fig. 6 is a schematic structural diagram of a first rotating shaft.

Reference numerals in the drawings: 1. motor shell; 2. rotating wheel; 3. rotating shaft; 4. first limiting nut; 5. second limiting nut; 6. first bearing; 7. second bearing; 8. stator core; 9. rotor; 10. third bearing; 11. blocking rod; 12. magnet steel; 13. oil blocking cover; 14. clamping slot; 15. stator winding; 16. protrusion.

### DETAILED DESCRIPTION OF THE EMBODIMENTS

The technical solutions in the embodiments of the present disclosure will be clearly and completely described below with reference to the accompanying drawings in the embodiments of the present disclosure. Obviously, the described embodiments are only a part of the embodiments of the present disclosure, rather than all of the embodiments. Based on the embodiments of the present disclosure, all other embodiments obtained by those of ordinary skill in the art without creative efforts fall within the scope of protection of the present disclosure.

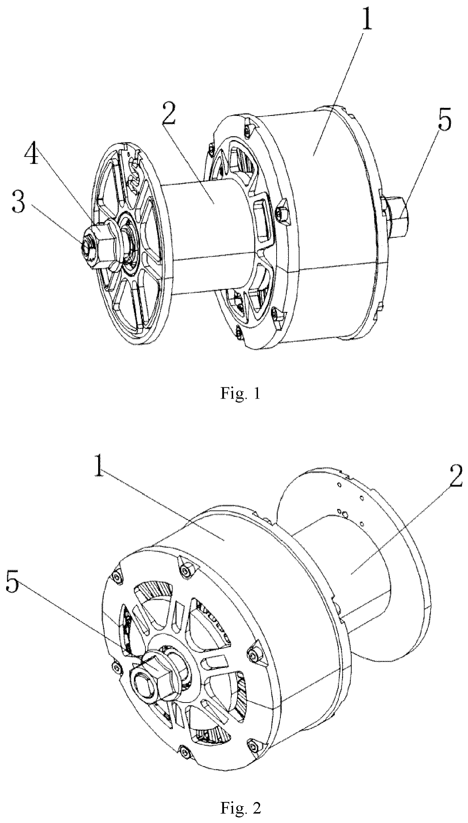

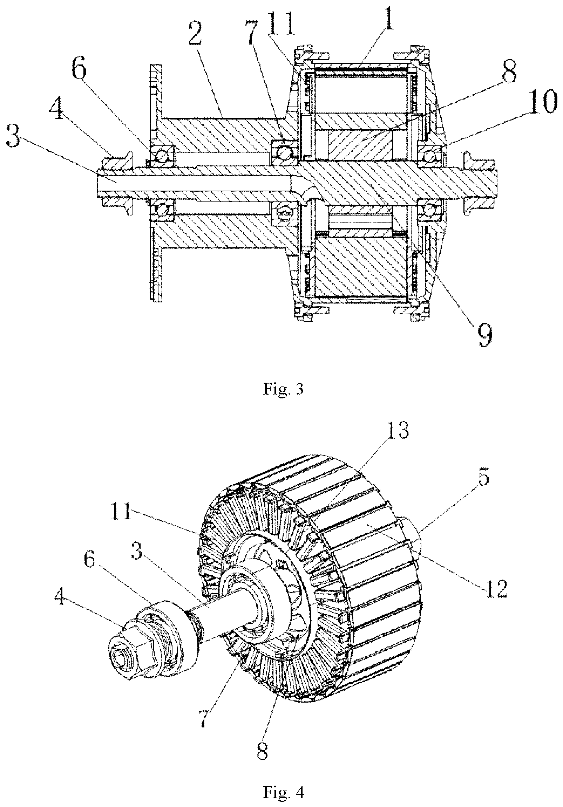

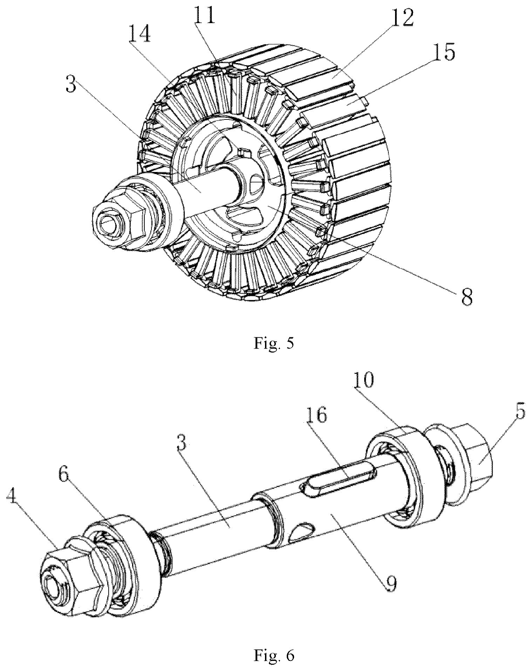

With reference to Figs. 1-6, in an embodiment of the present disclosure, a pull pump motor for fitness equipment includes a motor shell 1, wherein a stator core 8 is transversely provided inside the motor shell 1; a rotor 9 is transversely provided inside the stator core 8; the rotor 9 and the stator core 8 are configured to rotate in the same direction; a clamping slot 14 is formed on an inner side of the stator core 8; the clamping slot 14 is arched upward; the stator core 8 is connected to the rotor 9 through cooperation of the clamping slot 14; a protrusion 16 is vertically provided on a surface of the rotor 9; the protrusion 16 is vertically inserted into the clamping slot 14; through cooperation between the protrusion 16 and the clamping slot 14, rotation between the rotor 9 and the stator core 8 is made more stable and less prone to loosening; a rotating shaft 3 is transversely formed inside the rotor 9; the rotating shaft 3 and the rotor 9 are configured to rotate in the same direction; the rotating shaft 3 extends through the motor shell 1; a rotating wheel 2 is transversely inserted onto the rotating shaft 3; the rotating wheel 2 extends through the rotating shaft 3 and is connected to the rotor 9; the rotating wheel 2 is configured to rotate at a side of the motor shell 1; and the rotating wheel 2, the rotating shaft 3, and the rotor 9 are configured to rotate in the same direction; thereby, through the rotation of the rotor 9, the rotational speed of the rotating shaft 3 and the rotating wheel 2 is regulated, enabling the generation of resistance when connected and cooperating with an external pull pump, thereby replacing conventional weight blocks. The motor features a compact size, ensures safety, prevents muscle injury, and allows for adjustment of the extension and retraction speeds.

Stator windings 15 are circumferentially provided around an outside of the stator core 8; magnet steels 12 are circumferentially provided on an inner side of the motor shell 1; the magnet steels 12 are parallel to the stator windings 15; and the stator windings 15 and the magnet steels 12 are magnetically coupled to form a magnetic field.

A first bearing 6 is provided at a connection between the rotating wheel 2 and the rotating shaft 3; the first bearing 6 is sleeved on a left side of the rotating shaft 3; and the first bearing 6 and a left side surface of the rotating wheel 2 are on the same vertical plane, thereby enabling the rotating shaft 3 to rotate within the first bearing 6.

The rotating shaft 3 is provided with a first limiting nut 4; the first limiting nut 4 is located on the left side of the rotating shaft 3; and the first limiting nut 4 is parallel to the rotating wheel 2, such that the rotating wheel 2 is prevented from disengaging from the rotating shaft 3 during rotation by means of the first limiting nut 4.

A second bearing 7 is provided at a connection between the rotating wheel 2 and the rotor 9; the second bearing 7 is sleeved on a left side of the rotor 9; and the second bearing 7 and a left side surface of the motor shell 1 are on the same vertical plane, thereby enabling the rotor 9 to rotate within the second bearing 7.

A third bearing 10 is provided at a connection between the rotating shaft 3 and the motor shell 1; the third bearing 10 is located on a right side inside the motor shell 1; and the rotating shaft 3 extends through the third bearing 10, thereby enabling the rotating shaft 3 to rotate at a side of the motor shell 1.

The rotating shaft 3 is provided with a second limiting nut 5; the second limiting nut 5 is located on a right side of the rotating shaft 3; and the second limiting nut 5 is parallel to the motor shell 1, such that the rotating shaft 3 is prevented from disengaging from the inner portion of the motor shell 1 during rotation by means of the second limiting nut 5.

Oil blocking covers 13 are provided on left and right sides of the stator core 8; blocking rods 11 are circumferentially provided around edges of the oil blocking covers 13; and the blocking rods 11 are parallel to sides of the stator core 8.

For those skilled in the art, it is obvious that the present disclosure is not limited to the specifics of the aforementioned exemplary embodiments, and it can be implemented in other specific forms without deviating from the spirit or essential characteristics of the present disclosure. Hence, the embodiments should be considered illustrative and non-restrictive in every respect. The scope of the present disclosure is defined by the appended claims rather than the preceding description. Therefore, it is intended that all changes falling within the meaning and scope of equivalency of the claims be embraced within the scope of the present disclosure.

## Claims

1. A pull pump motor for fitness equipment, comprising a motor shell (1), wherein a stator core is transversely provided inside the motor shell; a rotor is transversely provided inside the stator core; the rotor and the stator core are configured to rotate in the same direction; a clamping slot is formed on an inner side of the stator core; the clamping slot is arched upward; the stator core is connected to the rotor through cooperation of the clamping slot; a protrusion is vertically provided on a surface of the rotor; the protrusion is vertically inserted into the clamping slot; through cooperation between the protrusion and the clamping slot, a rotating shaft is transversely formed inside the rotor; the rotating shaft and the rotor are configured to rotate in the same direction; the rotating shaft extends through the motor shell; a rotating wheel is transversely inserted onto the rotating shaft; the rotating wheel extends through the rotating shaft and is connected to the rotor; the rotating wheel is configured to rotate at a side of the motor shell; and the rotating wheel, the rotating shaft, and the rotor are configured to rotate in the same direction.

2. The pull pump motor for fitness equipment according to claim 1, wherein stator windings are circumferentially provided around an outside of the stator core; magnet steels are circumferentially provided on an inner side of the motor shell; the magnet steels are parallel to the stator windings; and the stator windings and the magnet steels are magnetically coupled to form a magnetic field.

3. The pull pump motor for fitness equipment according to claim 1, wherein a first bearing is provided at a connection between the rotating wheel and the rotating shaft; the first bearing is sleeved on a left side of the rotating shaft; and the first bearing and a left side surface of the rotating wheel are on the same vertical plane.

4. The pull pump motor for fitness equipment according to claim 1, wherein the rotating shaft is provided with a first limiting nut; the first limiting nut is located on the left side of the rotating shaft; and the first limiting nut is parallel to the rotating wheel.

5. The pull pump motor for fitness equipment according to claim 1, wherein a second bearing is provided at a connection between the rotating wheel and the rotor; the second bearing is sleeved on a left side of the rotor; and the second bearing and a left side surface of the motor shell are on the same vertical plane.

6. The pull pump motor for fitness equipment according to claim 1, wherein a third bearing is provided at a connection between the rotating shaft and the motor shell; the third bearing is located on a right side inside the motor shell; and the rotating shaft extends through the third bearing.

7. The pull pump motor for fitness equipment according to claim 1, wherein the rotating shaft is provided with a second limiting nut; the second limiting nut is located on a right side of the rotating shaft; and the second limiting nut is parallel to the motor shell.

8. The pull pump motor for fitness equipment according to claim 1, wherein oil blocking covers are provided on left and right sides of the stator core; blocking rods are circumferentially provided around edges of the oil blocking covers; and the blocking rods are parallel to sides of the stator core.
